(19) Europäisches Patentamt
European Patent Office
Office européen des brevets

(11) Publication number: 0 586 748 A1

# (12) EUROPEAN PATENT APPLICATION

(21) Application number: 92202765.1

(22) Date of filing: 11.09.92

(51) Int. Cl.[5]: G03C 1/83, G03C 1/005, G03C 5/17

(43) Date of publication of application: 16.03.94 Bulletin 94/11

(84) Designated Contracting States: BE DE FR GB NL

(71) Applicant: AGFA-GEVAERT naamloze vennootschap
Septestraat 27
B-2640 Mortsel(BE)

(72) Inventor: Kiekens, Eric
c/o Agfa-Gevaert N.V., DIE 3800, Septestr. 27
B - 2640 Mortsel(BE)
Inventor: Callant, Paul
c/o Agfa-Gevaert N.V., DIE 3800, Septestr. 27
B - 2640 Mortsel(BE)

## (54) Filter dyes for rapid processing applications.

(57) Filter dyes with a nitrile group as a substituent at the monomethine or trimethine chain are described. Said filter dyes have a broadened spectral absorption shifted bathochromically and can be incorporated in non-migratory state in hydrophilic colloid layers of photographic materials wherefrom they can be rapidly removed after being quickly decolourized in alkaline aqueous liquids used in the processing of said materials.

EP 0 586 748 A1

1. Field of the Invention

The present invention relates to filter dyes and their use as antihalation dyes in photographic elements.

2. Background of the Invention

Non-spectrally sensitizing dyes are widely used in photographic elements, particularly in photographic elements of the silver halide type. They may be used in a photosensitive silver halide emulsion layer as screening dyes, in an undercoat adjacent to the photosensitive layer and/or in a backing layer on the side of the support opposite to the photosensitive layer(s) to absorb reflected and scattered light thereby serving as antihalation dye or in an overcoat or interlayer to shield a particular photosensitive layer against undesired exposure being therefore referred to as filter or absorber dye, thereby adjusting the sensitivity of a photographic element as required in the production specifications.

For example in order to improve image sharpness an absorber dye can be present in one or more filter layers between silver halide emulsion layers that are coated at opposite sides of a transparent film support of an X-ray recording material. The imagewise exposure of said recording material proceeds in a cassette between a pair of X-ray intensifying screens that each are held in contact with an adjacent silver halide emulsion layer. By said arrangement the imaging light that would cross the support and to some extent becomes scattered thereby, is considerably attenuated and cannot give rise to an unsharp image in an opposite silver halide emulsion layer.

Spectrally the dye absorption spectrum should approximately be equal to the sensitivity spectrum of the corresponding silver halide emulsion in the layer of which a sharp image has to be reproduced.

On the one hand it is very important that filter dyes remain, i.e. that they are non-migratory, in the layer wherein they have been incorporated especially when this layer is in direct contact with the silver halide emulsion layer in order to prevent a desensitizing action on the silver halide. On the other hand the filter dyes may not stain the photographic material after image processing. Therefore preference is given to filter dyes that decolorize or can be removed from the photographic element in the processing stage. This requirement is nowadays becoming more and more stringent as rapid processing times are of increasing interest.

As described in US-P 3,560,214 dyes comprising a carboxyl and phenyl substituted pyrazoline nucleus linked through a methine group to a dialkylaminophenyl group can be removed relatively easily in alkaline aqueous processing liquids but lack sufficient fastness to diffusion in hydrophilic colloid layers.

Other filter dyes characterized by the presence of a 2-pyrazolin-5-one nucleus substituted with a carboxyphenyl group and including a methine group or chain linked to a dialkylamino group are described in US-P 4,857,446. The decolorization of said filter dyes proceeds very rapidly in alkaline aqueous processing baths. The monomethine dyes have an absorption spectrum of which the maximum is in the shorter wavelength range of the visible spectrum so that normally a second filter dye is needed to block or absorb green light and even a third one to absorb radiations of longer wavelengths, e.g. radiations in the red or even in the infrared region.

Once a filter dye has been selected, the problem is how to get the filter dye in a coated layer so that all the requirements mentioned previously are met.

One of the possibilities is to make use of solid particle dispersions of water insoluble dyes as has been described in EP 0,384,633 A2; EP 0,323,729 A2; EP 0,274,723 B1, EP 0,276,566 B1, EP 0,351,593 A2 and US-Patents 4,900,653; 4,904,565; 4,949,654; 4,940,654; 4,948,717; 4,988,611 and 4,803,150.

Another possibility is offered in Research Disclosure 19551 (July 1980) which describes an approach of associating hydrofobic compounds with latex polymer particles.

EP 0,401,709 A2 describes the dissolution of hydrophobic dyes into oil droplets being substantially insoluble in water and the preparation of the corresponding oilformer dispersions or loaded polymer latex dispersions.

To prevent dye wandering, the dye is often coated with a mordant to bind the dye in the layer in which it is coated as is e.g. illustrated in US-Patent 2,527,583. As dye mordants polymers are often used.

Another possibility is offered by adsorption of dyes at the surface of very fine light-insensitive silver halide crystals with the expectable disadvantages of the coating of more silver halide crystals and possibly fixation difficulties.

Very few dyes satisfy the above requirements especially when rapid processing is concerned. Moreover, apart from the requirement of non-diffusibility and of rapid decolourizing or removal by rapid processing that the dyes should meet, they should have high stability in the photographic material, not only under the influence of the ingredients present in the emulsion layers prior to coating, but especially under

severe storage conditions of the packed material e.g. under circumstances of high temperatures and high degrees of humidity.

3. Objects and Summary of the Invention

It is an object of the present invention to provide new dyes that can be incorporated in non-migratory state in hydrophilic colloid layers of photographic materials wherefrom they can be rapidly removed in alkaline aqueous liquids used in the processing of said materials.

It is a further object of the invention to provide new dyes providing high density in the required spectral region, thereby reducing the cross-over effect in double-sided photographic elements, particularly radiographic materials.

Other objects will become apparent from the description hereinafter.

In accordance with the present invention dyes are provided corresponding to the following general formula (I):

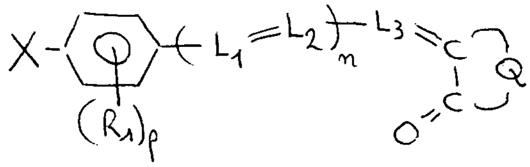

(I)

wherein
n represents 0 or 1;
p represents 0, 1 or 2;
$L_1$, $L_2$, $L_3$ represent substituted or unsubstituted methine with the proviso that at least one of $L_1$, $L_2$ or $L_3$ must be substituted by -CN
Q represents the necessary atoms to form an acidic nucleus such as pyrazolone, barbituric acid, thiobarbituric acid, rhodanine, hydantoine, oxazolidindione, thio-oxazolidindione, isoxazolinone etc.
$R_1$ represents hydrogen, substituted or unsubstituted alkyl, substituted or unsubstituted aryl, $COOR_2$,$NHCOR_3$ or $NHSO_2R_4$ with $R_2$ representing hydrogen or substituted or unsubstituted alkyl, $R_3$ and $R_4$ representing substituted or unsubstituted alkyl, or substituted or unsubstituted aryl,
X represents $OR_5$, $SR_5$ or $NR_6R_7$
$R_5$ represents H, substituted or unsubstituted alkyl, substituted or unsubstituted aryl
each of $R_6$ and $R_7$ which may be the same or different represents hydrogen, substituted or unsubstituted alkyl, substituted or unsubstituted aryl or the necessary atoms, e.g. trimethylene, to form a ring together with the N-atom to which they are attached and the C-atom of the phenylene ring in ortho position with respect to said N-atom; $R_6$ and $R_7$ together may also represent the necessary atoms to form a ring with the N-atom to which they are attached;
and wherein at least one of $R_1$ to $R_7$ contains an ionizable group.

More preferably dyes according to this invention are corresponding to the following general formula (II)

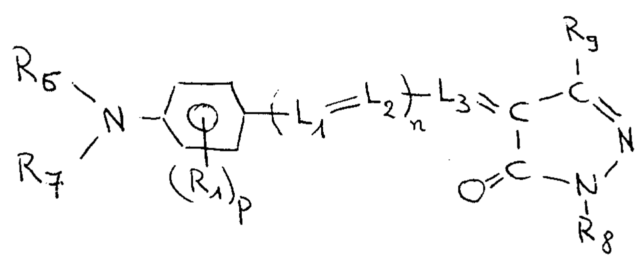

(II)

wherein each of n, p, $R_1$, $R_6$, $R_7$, $L_1$, $L_2$ and $L_3$ has one of the meanings given hereinbefore and
$R_8$ represents hydrogen, substituted or unsubstituted alkyl, substituted or unsubstituted aryl, or sulfolanyl,
$R_9$ represents hydrogen, substituted or unsubstituted alkyl, substituted or unsubstituted aryl, $COOR_2$, $NHCOR_3$, $NHSO_2R_4$, with $R_2$, $R_3$ and $R_4$ representing hydrogen, substituted or unsubstituted alkyl, or substituted or unsubstituted aryl, and wherein at least one of $R_1$ to $R_9$ contains an alkali-soluble group.

In accordance with the present invention a photographic element is provided comprising a support and at least one photo-sensitive silver halide emulsion layer, wherein said element comprises, dispersed in a hydrophilic water-permeable colloid binder, e.g. gelatin, at least one dye according to the above general formula.

Further in accordance with the present invention a photographic element is provided comprising a support and at least one photo-sensitive silver halide emulsion layer, wherein said element comprises said at least one dye according to the above formula in a solid particle state by acidifying the slightly alkaline coating solution "in situ" at the moment the coating solution is applied.

4. Detailed description of the Invention

The presence of a nitrile group as a substituent on the methine chain is very characteristic for the dyes suitable for use in this invention. The absence of this nitrile-group does not only affect the spectral behaviour, shifting the absorption to shorter wavelengths, but doesn't allow the dye to be decolourized quickly enough, as required in rapid processing conditions, especially for 38 s processing cycles.

The synthesis of the dyes used according to the present invention has been described in J. Signal AM, vol. 9, p.31 (1981) by R. Stolle and G. Bach.

An alternative way to the synthesis of alpha-CN-substituted benzylidene dyes makes use of the addition KCN, dissolved in DMSO as a solvent, to the corresponding unsubstituted dye, followed by the addition of iodine. This step allows the preparation of the double bond resonance structure, giving rise to the coloured dye. The corresponding dye is precipitated in water at the end of this preparative step.

Another way to synthesize the dyes for use in accordance with this invention has been described by Junek and Klade in "Dyes and Pigments", Vol. 9, p. 393-399 (1988). The reaction between a pyrazolon derivative and tetracyanoethylene leads to malonitril and a dicyanoethylene compound, which reacts with anilin to a leuco dye, giving the preferred dye and HCN after heating and exposing said leuco dye with light. From an ecological point of view the way as described hereinbefore is not a preferable one as an equivalent amount of malonitril and hydrogen cyanide are set free. Analogous ways to prepare analogous types of dyes are given by Junek et al. in Tetrahedron Letters, p. 2993-2996 (1973) and in Liebigs Ann. Chem., p. 7-14 (1992) and by Bespalov et al. in Tetrahedron Lett., p. 1867-1870 (1976).

Another synthesis can be realized by reaction of the aldehyd (1), the ketomethylene compound (2) and the cyanide generating agent KCN (4), refluxing in a mixture of ethyl alcohol and demineralized water. A colourless intermediary compound (5) is formed in this way. After acidifying said mixture an oxydation reaction of said colourless compound (5) by means of potassium persulphate (6) is leading to the coloured dye (7). Although this preparation method is following a direct way to get the expected coloured dye, the application has not to be recommended as the product yield is insufficient.

The corresponding reaction scheme for the synthesis of the dyes in accordance with this invention is given hereinafter:

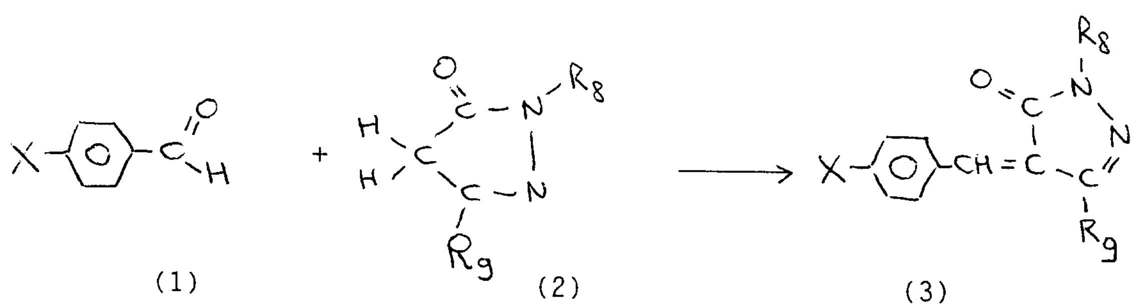

(1) (2) (3)

(3)

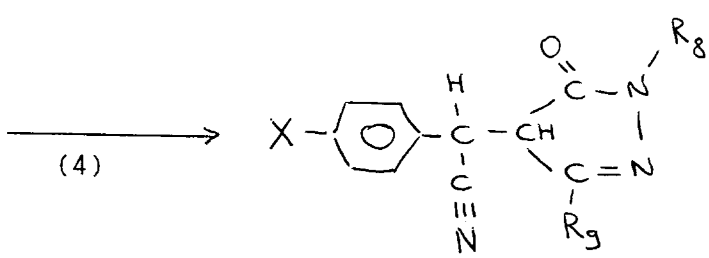


(5)

(5) 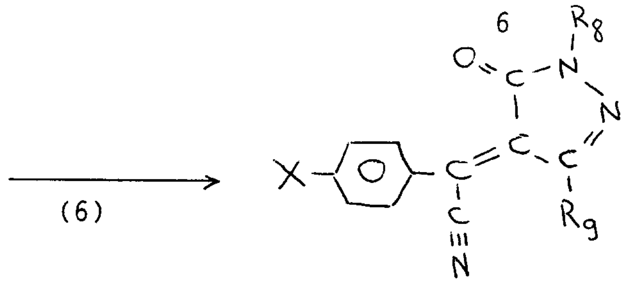

(7)

In another method the orange coloured dye (3) has been prepared in the classical way: refluxing compounds (1) and (2) in ethyl alcohol, eventually in the presence of acetic acid or an amine, acting as a catalyst and ending this reaction by filtration of the generated precipitate. Said orange coloured dye (3) is refluxed in methyl alcohol together with sodium cyanide (4') and the intermediary structured compound (5) is oxydized with Fe(III)-chloride. As the residual Fe(II)-ions in the reaction vessel are not completely removed after purification, it is possible to get unwanted photographic reduction reactions like fog formation, so that this reaction way is not a preferred one either.

It is generally suggested that the addition of cyanide-ions at compound (3) may occur in different solvents, with the restriction that the pH-value in the reaction mixture has to be situated between 7 and 9. Lower values of pH are causing the poisonous hydrogen cyanide to escape as a gas from the reaction medium, whereas at higher pH-values hydroxyl-ions are added at the dye. As cyanide-ions generator alkali metal cyanides are preferred, and in organic solvents it is even possible to use cyan hydrine compounds as e.g. aceton cyan hydrine. A successful oxidation reaction can only be performed at low pH-values of about 5. Typical useful oxidising agents are persulphates, peroxides, air oxygen, Fe(III), Pb(IV), Sn(IV), Ce(IV) and other transition metal ion salts.

A preferred way that has been explored in this invention is starting from the coloured dye (3) that has been synthesized by means of well-known methods. This coloured dye was dissolved in DMSO together with a slight excess of KCN or NaCN. At room temperature the orange colour disappeared. Further oxidation was performed using an equivalent amount of iodine. Magenta coloured dyes (7) were obtained by the addition of demineralized water thus precipitating the dye.

As ketomethylene compounds (2) use can be made of pyrazolidinone, isoxazolone, thiobarbituric acid, barbituric acid and the like.

Representative examples of CN-substituted benzylidene dyes for use in the present invention are the following monomethine (n = 0) or trimethine (n = 1) dyes corresponding to formula (II) wherein p = 0, $R_1$ = H and $R_6$, $R_7$, $R_8$, and $R_9$ have the following meanings:

| n | $R_6 = R_7$ | $R_8$ | $R_9$ | dye structure |
|---|---|---|---|---|
| 0 | $CH_3$ | $CH_2CF_3$ | COOH | (III) |
| 1 | $CH_3$ | $CH_2CF_3$ | COOH | (IV) |
| 0 | $CH_3$ | $C_6H_4COOH$ | $CH_3$ | (V) |
| 1 | $CH_3$ | $C_6H_4COOH$ | $CH_3$ | (VI) |
| 0 | $CH_2COOH$ | $C_6H_5$ | $CH_3$ | (VII) |
| 0 | $CH_3$ | sulfolanyl | COOH | (VIII) |
| 1 | $CH_3$ | sulfolanyl | COOH | (IX) |
| 0 | $CH_2COOH$ | sulfolanyl | $COOC_2H_5$ | (X) |
| 0 | $CH_3$ | $C_6H_5$ | COOH | (XI) |
| 1 | $CH_3$ | $C_6H_5$ | COOH | (XII) |
| 0 | $CH_3$ | $C_6H_4COOH$ | $COOC_2H_5$ | (XIII) |
| 1 | $CH_3$ | $C_6H_4COOH$ | $COOC_2H_5$ | (XIV) |

The compounds with n = 0 are particularly useful for blocking light in the green spectral region (500-600 nm) as their absorption spectrum is shifted bathochromically in comparison with the corresponding dyes having no nitrile substituent, whereas the compounds with n = 1 have a maximum absorption wavelength of about 620 nm.

Besides it has quite unexpectedly been found that the dyes according to the formulae (III) to (XIV) are decolourized very rapidly in comparison with their corresponding dyes without CN-substituent.

From the prior art it is known that the presence of one or more weakly-acidic groups in dyes is important to provide alkali-solubility and nevertheless sufficient non-migratory character at coating pH values in the range of 4 to 8.

In the acid pH range the filter dyes according to the present invention can be incorporated in aqueous coating compositions in dispersed form e.g. by using commercial mixing devices for making colloidal dispersions, e.g. in gelatin. The size of the dye particles obtained is chosen to facilitate coating and rapid decolouration of the dye. Where the dyes are initially crystallized in the form of particles larger than desired for use, conventional techniques for achieving smaller particle sizes can be employed, such as ball milling, roller milling, sand milling and the like.

The solid particle dispersions cannot only be prepared in the presence of gelatin as a colloidal medium but also e.g. in colloidal silica. A preferred method of preparing such an aqueous solid particle dispersion in silica of a dye according to one of the above formulae for incorporation in one of the layers of a photographic silver halide material comprises the steps of

- dissolving the non-watersoluble but alkali-soluble compound in an aqueous alkaline solution, if necessary with the help of an organic water soluble solvent
- precipitating the said compound from said solution in the presence of colloidal silica sol, preferably in the further presence of a dispersing agent by lowering the pH of the solution, e.g. by neutralizing with an aqueous acidic solution
- removing water-soluble salts formed by the precipitation and any organic solvent used, and
- concentrating the dispersion either during or after the precipitation by dialysis or ultrafiltration or after precipitation by flocculation and decantation, followed by washing and further decantation.

Said precipitation in the presence of colloidal silica sol preferably occurs in the further presence of a dispersing agent, like e.g. a 2-N,N,N-trialkylamino-acetic acid and can be performed by simultaneous addition of an aqueous alkaline solution comprising the alkaline-soluble dye and an aqueous acidic solution, to a stirred solution comprising the total or partial amount of colloidal silica sol and of dispersing agent while keeping the pH constant, preferably at a value of less than 6.0, the rest of said amount if any being present in at least one of said alkaline or acid solutions.

Preferred dispersing agents used during the preparation of solid silica dispersions are one or more partially ionizable polymer(s) or one or more surfactant(s) or a combination thereof.

Another possibility to obtain ultra fine dye dispersions consists in acidifying a slightly alkaline coating composition "in situ" just before coating it onto the supporting layer. It has been found that the application of this dosage technique allows us to obtain the dyes in a very fine solid particle form, homogeneously divided into the coated layer so that solid particles can hardly be observed even by means of microscopic techniques.

The non-diffusing dyes incorporated into a hydrophilic layer of a photographic element as solid particles by one of the techniques referred to hereinbefore have a mean diameter of less than 10 µm, more preferably less than 1 µm and still more preferably less than 0.1 µm.

At a pH of at least 10 the dispersed filter dyes are easily solubilized so they are removed almost completely from a hydrophilic waterpermeable colloid layer of a photographic silver halide emulsion material by its common alkaline aqueous liquid processing and leave almost no residual stain. The presence of sulfite in the processing solution contributes to a more rapid discoloration of the filter dyes.

Particularly for 38 s processing cycles, comprising a development, fixing, rinsing and drying step, photographic elements with dyes according to this invention in one or more hydrophilic layers are very rapidly discoloured.

The hydrophilic colloidal layer(s) in which the dye(s) are incorporated in accordance with the present invention can be a backing layer, an antihalation undercoating layer, a silver halide emulsion layer, an intermediate layer and a protective outermost layer.

Emulsion layers in accordance with this invention may contain light-sensitive silver halide crystals with a diameter of at least 0.1 µm. Intermediate layers in accordance with the present invention may contain very fine light-insensitive silver halide particles with a diameter of 10 to 100 nm known as Lippmann emulsions, incorporated into said layers e.g. to serve as scavangers to prevent oxidised developer products to migrate into adjacent layers.

The layers previously mentioned as suitable layers comprising a filter or antihalation dye may be incorporated in e.g. X-ray materials, graphic arts materials, diffusion transfer materials, black and white or colour cinematographic materials etc.

According to a preferred embodiment the dye or dyes are incorporated in a antihalation back coating layer or a antihalation undercoating layer or layers for photographic materials, especially as antihalation under-coating layer(s) for double-coated X-ray photographic materials.

In an outermost layer or layers or in an emulsion layer or layers one or more dyes according to this invention may be used to adjust the sensitivity of the photographic material as required by the production specifications. So it is possible to apply a dye dosing feeder just before coating the hydrophilic layer concerned and to control the production of the photographic material in this way, the dye(s) being dosed e.g. from a gelatinous dispersion.

The dyes absorbing in the green spectral range can be used advantageously between silver halide emulsion layers of double-sided emulsion coated (duplitized) photographic film material applied in X-ray recording for use with green light emitting X-ray conversion phosphor screens. By said arrangement the green light that would cross the support and to some extent become scattered thereby, is considerably attenuated and cannot give rise to an unsharp image in an opposite silver halide emulsion layer.

Green light emitting phosphor screens and their use in combination with green sensitive silver halide emulsion layers of a double side coated (duplitized) film are described e.g. in US-P 4,130,428, wherein also several measures, e.g. the use of filter dyes, to reduce cross-over light have been described.

In a particular embodiment of the present invention the dyes are incorporated into a radiographic material that is provided at both sides of the support with a silver halide emulsion layer and an antistress layer as a protective layer coated thereover. The radiographic material preferably has on both sides of the film support silver halide emulsion coatings that are split into two distinctive emulsion layers having silver halide crystals of different average grain size one of which is a high speed emulsion layer and the other is a low speed emulsion layer; the high speed emulsion layer being situated at a larger distance from the support than the low speed emulsion layer. This way the sensitometric curve can be fine-tuned, giving the perfect profile for the specific application. The layer arrangement may also be opposite to the previously cited sequence in order to get a higher contrast. Moreover even without using a separate anticrossover layer this layer arrangement reduces crossover, especially in the critical low density area. In the presence of crossover preventing antihalation undercoat layers containing the dyes according to this invention the crossover reduction is improved without leaving a colour stain upon processing, especially upon rapid processing in less than 60 seconds, preferably in 38 seconds as a reference processing time of materials with high-throughput.

According to another embodiment said green-light absorbing dyes can be used in a antihalation layer of a photographic silver halide emulsion material in order to improve image sharpness by absorbing exposure light penetrating the emulsion layer(s) into the direction of the support. The use of said mainly green light absorbing dyes in a antihalation layer is particularly advantageous in silver halide emulsion materials that are made spectrally sensitive to green light and of which the exposure proceeds with a green light emitting laser e.g. argon ion laser the main power of which is emitted at 488 and 514 nm.

The following examples illustrate the present invention without however limiting it thereto.

EXAMPLE

1. Optical properties of the dyes coated as a dispersion on a film support.

-Procedure for the preparation of the dye dispersion

10 g of the dye 1 corresponding to structure (V) of the above table, were dispersed at 40 °C in 200 g of a 10 % aqueous gelatin solution making use of a rotating ball mill with zirconium oxide pearls having a diameter of 0,6 to 0.8 µm. At a dye particle size of about 1 µm the milling process was stopped and the dispersion was separated from the milling material.

- Coating procedure

Chromium (III) acetate as hardening agent and additional gelatin were added to the above prepared dye dispersion and the dispersion was kept at a temperature of 36 °C and a pH of 6.1.

The dispersion was coated on a polyethylene terephthalate film support of 175 µm thickness at both sides thereof in order to obtain at each side a dye coverage of 0.25 g/$m^2$, a gelatin coverage of 1 g/$m^2$ and a coverage of hardening agent of 0.016 g/$m^2$.

In Table 1 the wavelength of maximal absorption (λ-max) of the coated materials is given together with the half band width (HBW) values of their absorption expressed in nm, their density (D) measured at λ-max and at 540 nm, the latter being the main emission wavelength of a $Gd_2O_2S$:Tb phosphor used in X-ray intensifying screens.

Table 1

| Dye No. | λ-max nm | HBW nm | D at λ-max | D at 540 nm |
|---|---|---|---|---|
| dye 1 (invention) | 480 | 205 | 0.44 | 0.39 |
| dye 2 (comparison) | 444 | 176 | 1.28 | 0.54 |

Comparison dye 2 is dye 1 of Table 1 of US-Patent 4,857,446.

2. Rate of dye diffusion in a coated layer.

In order to determine the resistance to diffusion of the dye in the coated layer, the above described coating of each dye was rinsed with distilled water at 20 °C for 5 minutes. Before and after this water rinsing treatment the spectral density (D) at the maximum absorption wavelength (D at λ-max) of the double-side coated material was measured. The results are summarized in Table 2.

Table 2

| | D at λ-max | |
|---|---|---|
| | Before rinsing | After rinsing |
| dye 1 (invention) | 0.44 | 0.43 |
| dye 2 (comparison) | 1.28 | 1.28 |

The negligible change in spectral density (D) at λ-max before and after rinsing with water is a measure for the low diffusion rate of the dye in the coating layer.

3. Decolourizing of the dyes, coated in an anti cross-over layer, under practical processing conditions.

To check the decolourizing properties of the dyes in practical conditions the dyes were coated on both sides of a polyethylene terephthalate film support in an anti cross-over layer and overcoated with an emulsion and a protective layer. The samples were processed in a 90 or a 38 seconds processing cycle and the spectral density at the maximum absorption wavelength of the dye was determined. A low value of this spectral density means that the dye decolourizes well during the processing.

The composition of the sample coatings, developers and fixers and the processing conditions are given below :

Composition of the coatings of the samples:

In the emulsion layer no spectral sensitizer was used because its absorption spectrum might interfere with that of the dyes under investigation.

The coating amounts of the products used, expressed as gram per square meter ($g/m^2$), per side of the different layers were as follows :

- anti cross-over layer:

| | |
|---|---|
| gelatine | 1 $g/m^2$ |
| dye | see table 3 |
| chromium (III) acetate | 0.016 $g/m^2$ |

- emulsion layer:

| | |
|---|---|
| AgBr(I) crystals (2 mole % of iodide, 98% bromide):<br>(mean size calculated from electron microscopy :<br>gelatin<br>4-hydroxy-6-methyl-1,3,3a,7-tetraazaindene:<br>sorbitol<br>dextran (MW10000) | 4.15 g/$m^2$ as $AgNO_3$<br>0.8 μm)<br>2.10 g/$m^2$<br>0.006 g/$m^2$<br>0.20 g/$m^2$<br>0.60 g/$m^2$ |

- protective layer :

| | |
|---|---|
| gelatin<br>polymethylmethacrylate (average particle diameter : 6 μm)<br>formaldehyd | 1.10 g/$m^2$<br>0.023 g/$m^2$<br>0.10 g/$m^2$ |

Conditions for the 90 seconds processing cycle :

-processing machine : CURIX 402 (Agfa-Gevaert trade name) with the following processing time (in seconds (sec.)) and temperature (in °C) characteristics:

| | |
|---|---|
| loading | 3.4 sec. |
| developing | 23.4 sec./ 35°C in developer AGFA G138 (trade name) |
| cross-over | 3.8 sec. |
| fixing | 15.7 sec./ 35°C in fixer AGFA G334 (trade name) |
| cross-over | 3.8 sec. |
| rinsing | 15.7 sec./ 20°C. |
| cross-over + drying | 32.2 sec. |
| total time | 98.0 sec. |

Conditions for the 38 seconds processing :

-processing machine : CURIX HT530 (Agfa-Gevaert trade name) with the following time (in seconds) and temperature (in °C) characteristics:

| | |
|---|---|
| loading | 0.2 sec. |
| developing | 9.3 sec. 35°C in developer II described below |
| cross-over | 1.4 sec. |
| rinsing | 0.9 sec. |
| cross-over | 1.5 sec. |
| fixing | 6.6 sec. 35°C in fixer II described below |
| cross-over | 2.0 sec. |
| rinsing | 4.4 sec. 20°C |
| cross-over | 4.6 sec. |
| drying | 6.7 sec. |
| total | 37.6 sec. |

Composition of the three-part developer (for 38 seconds processing), the three parts called respectively A,B and C.

-concentrated part A:

| | |
|---|---|
| water | 200 ml |
| potassium bromide | 12 grams |
| potassium sulphite (65% solution) | 249 grams |
| ethylenediaminetetraacetic acid, sodium salt, trihydrate | 9.6 grams |
| hydroquinone | 106 grams |
| sodiumtetraborate, decahydrate | 70 grams |
| potassium carbonate | 38 grams |
| potassium hydroxide | 77 grams |
| diethylene glycol | 56 grams |
| 5-methylbenzotriazole | 0.076 grams |
| water to make 1 liter | |
| pH adjusted to 11.80 at 25 ° C with potassium hydroxide. | |

-concentrated part B:

| | |
|---|---|
| acetic acid | 30.1 grams |
| 1-phenyl -3-pyrazolidinone | 20.0 grams |
| 5-nitro-indazole | 1.15 grams |
| diethylene glycol to make 100ml | |

-concentrated part C:

| | |
|---|---|
| glutaric dialdehyde (50% solution) | 17.8 grams |
| potassiummetabisulphite | 26.0 grams |
| water to make 100ml | |

For initiation of the processing the three parts were mixed in the following ratio : 250 ml of part A, 700 ml of water, 25 ml of part B and 25 ml of part C thus yielding developer II. No starter solution was added. A pH of 10.40 at 25 ° C was measured.

Composition of fixer (containing a hardener):

-concentrated part A :

| | |
|---|---|
| ammoniumthiosulphate (78% solution) | 661 grams |
| sodium sulphite | 54 grams |
| boric acid | 25 grams |
| sodium acetate trihydrate | 70 grams |
| acetic acid | 40 grams |
| water to make 1 liter | |
| pH adjusted with acetic acid to 5.30 at 25 ° C | |

-concentrated part B :

| | |
|---|---|
| water | 150 ml |
| acetic acid | 10 grams |
| sulphuric acid | 13 grams |
| aluminium sulphate (34% solution) | 27 grams |
| water to make 250ml | |

Fixer II ready for use was then made by mixing concentrated part A, water and concentrated part B in the following ratio: respectively 250 ml , 687.5 ml and 62.5 ml. A pH of this mixture of 4.25 at 25°C was measured.
The densities at λ-max of the dyes before and after processing are given in table 3.

Table 3

| | before processing | | after processing | |
|---|---|---|---|---|
| | dye coating weight $g/m^2$ per side | density at 540nm | density at λ-max of dye 90 seconds | 38 seconds |
| dye 1 (invention) | 0.100 | 0.16 | 0.000 | 0.005 |
| dye 2 (comparison) | 0.063 | 0.18 | 0.000 | 0.015 |

The low density values at maximum wavelength λ-max for both dyes even after the 38 seconds processing cycle show the excellent decolourizing properties of these dyes coated in an anti cross-over layer.

4. Evaluation of the photographic properties of the dyes in an anti cross-over layer.

Coating

The coatings described under item 3 were repeated, except for the presence in the emulsion layer of anhydro-5,5'-dichloro-3,3'-bis(n-sulphobutyl)-9-ethyl-oxacarbocyanine hydroxide as an optical sensitizer. A coating without a dye added to the anti cross-over layer was used as a reference.

Exposure, sensitometry and densitometry:

Samples of these coatings were illuminated using a continuous wedge with green light of 540 nm during 0.1 second and were processed for 90 seconds, following the cycle described above. The density was measured as a function of the amount of exposure dose and therefrom the following sensitometric properties were determined :

- the fog level (with an accuracy of 0.001 density)
- the relative speed S at a density of 1 above fog (the sample without anti cross-over layer was set to a speed of 100, a lower value meaning a less sensitive photographic sample.

Determination of the cross-over percentage:

The cross-over percentage (% cross-over) was determined as follows. The double side coated samples were adjusted between a single green light emitting screen (CURIX ortho Regular : Agfa-Gevaert trade name) and a white paper, replacing the second screen. This film-screen element, directed with its light emitting screen to the X-ray tube, was then exposed with varying X-ray doses, expressed as log E. After

processing these samples in the 90 seconds cycle, the minimal dose (log E) needed to obtain a density of 0.5 above fog was determined for the frontlayer (log E front) and the backlayer (log E back) separately. The cross-over percentage was then calculated according to the following equation :

% cross-over = 100/antilog(logE back - logE front)

In table 4 the results of these photographic tests are summarized.

Table 4

| Photographic effect of the dyes (sensitometry) and cross-over percentage. | | | |
|---|---|---|---|
| sample dye | sensitometry | | % cross-over |
| | fog | speed | |
| no dye (reference) | 0.016 | 100 | 40.7 |
| dye 1 (invention) | 0.019 | 84 | 27.5 |
| dye 2 (comparison) | 0.017 | 89 | 26.4 |

This table shows that the dyes (invention and comparison) significantly reduce the cross-over percentage if compared with the reference without dye, with an acceptable decrease in sensitivity. It is further shown that fog is not influenced to a noteworthy extent by the precence of the dyes.

**Claims**

1. A photographic material comprising a support and at least one light-sensitive silver halide emulsion layer characterised in that it comprises in a hydrophilic colloid layer at least one monomethine or trimethine dye having a nitrile substituent at the methine chain.

2. A photographic material according to claim 1 wherein said at least one dye is a filter dye corresponding to the following general formula (I):

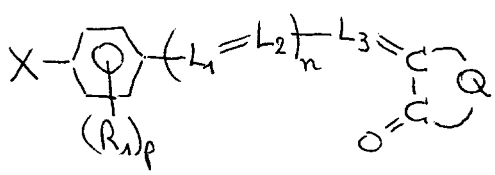

(I)

wherein
n represents 0 or 1;
p represents 0, 1 or 2;
$L_1$, $L_2$, $L_3$ represent substituted or unsubstituted methine with the proviso that at least one of $L_1$, $L_2$ or $L_3$ must be substituted by -CN
Q represents the necessary atoms to form an acidic nucleus such as pyrazolone, barbituric acid, thiobarbituric acid, rhodanine, hydantoine, oxazolidindione, thio-oxazolidindione, isoxazolinone etc.
$R_1$ represents hydrogen, substituted or unsubstituted alkyl, substituted or unsubstituted aryl, $COOR_2$,$NHCOR_3$ or $NHSO_2R_4$ with $R_2$ representing hydrogen or substituted or unsubstituted alkyl, $R_3$ and $R_4$ representing substituted or unsubstituted alkyl, or substituted or unsubstituted aryl,
X represents $OR_5$, $SR_5$ or $NR_6R_7$
$R_5$ represents H, substituted or unsubstituted alkyl, substituted or unsubstituted aryl
each of $R_6$ and $R_7$ which may be the same or different represents hydrogen, substituted or unsubstituted alkyl, substituted or unsubstituted aryl or the necessary atoms, e.g. trimethylene, to form a ring together with the N-atom to which they are attached and the C-atom of the phenylene ring in ortho position with respect to said N-atom; $R_6$ and $R_7$ together may also represent the necessary atoms to form a ring with the N-atom to which they are attached;
and wherein at least one of $R_1$ to $R_7$ contains an ionizable group.

**3.** A photographic material according to claim 2 wherein said at least one dye is a filter dye corresponding to the following general formula (II):

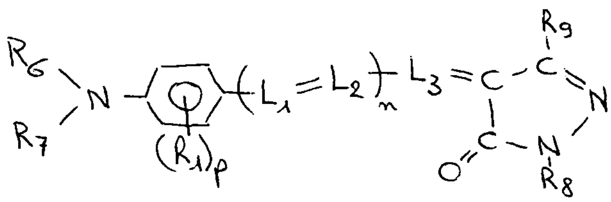

(II)

wherein each of n, p, $R_1$, $R_6$, $R_7$, $L_1$, $L_2$ and $L_3$ has one of the meanings given in claim 2,
$R_8$ represents hydrogen, substituted or unsubstituted alkyl, substituted or unsubstituted aryl, or sulfolanyl,
$R_9$ represents hydrogen, substituted or unsubstituted alkyl, substituted or unsubstituted aryl,$COOR_2$, $NHCOR_3$, $NHSO_2R_4$, with $R_2$, $R_3$ and $R_4$ representing hydrogen, substituted or unsubstituted alkyl, or substituted or unsubstituted aryl, and wherein at least one of $R_1$ to $R_9$ contains an alkali-soluble group.

**4.** A photographic material according to any of claims 1 to 3 wherein said at least one filter dye is incorporated into an antihalation undercoat layer coated between the support and at least one silver halide emulsion layer.

**5.** A photographic material according to any of claims 1 to 3 wherein said at least one filter dye is incorporated into a backing layer.

**6.** A photographic material according to any of claims 1 to 5 wherein the dye(s) is(are) present in a hydrophilic colloid layer in an amount of 0.01 to 1.0 $mmole/m^2$.

**7.** A photographic material according to any of claims 4 to 6 wherein the filter dye(s) is(are) present as a gelatinous dispersion(s).

**8.** A photographic material according to any of claims 4 to 6 wherein the filter dye(s) is(are) present as solid silica particle dispersion(s).

**9.** A photographic material according to any of claims 4 to 8 wherein said photographic material is an X-ray material.

**10.** Use of a photographic material according to claim 9 for rapid processing applications shorter than 60 seconds, comprising the developing, fixing, rinsing and drying steps.

European Patent Office

# EUROPEAN SEARCH REPORT

Application Number

EP 92 20 2765

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X<br>Y | GB-A-2 032 636 (VEB FILMFABRIK WOLFEN)<br>* the whole document * | 1-6<br>7,9,10 | G03C1/83<br>G03C1/005<br>G03C5/17 |
| Y | EP-A-0 276 566 (EASTMAN KODAK COMPANY)<br>* abstract * | 7,9,10 | |
| A | EP-A-0 435 561 (KONICA CORPORATION)<br>* page 25, line 14 - line 19 * | 8 | |
| A | US-A-3 637 391 (W SALECK ET AL)<br>* the whole document * | 8 | |
| A | DATABASE WPI<br>Section Ch, Week 7814,<br>Derwent Publications Ltd., London, GB;<br>Class G01, AN 78-26060A<br>& JP-A-53 018 634 (DAINICHI SEIKA KOGY KK)<br>21 February 1978<br>* abstract * | 8 | |
| X | NL-A-62 214 (GEVAERT PHOTOPRODUCTEN NV)<br>*CompoundsIII,IV*<br>* claim 6 * | 1 | TECHNICAL FIELDS SEARCHED (Int. Cl.5)<br>G03C<br>C09B |

The present search report has been drawn up for all claims

| Place of search | Date of completion of the search | Examiner |
|---|---|---|
| THE HAGUE | 18 MAY 1993 | BOLGER W. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document